# EUROPÄISCHE PATENTSCHRIFT

(11) **EP 1 610 971 B1**
(45) Veröffentlichungstag und Bekanntmachung des Hinweises auf die Patenterteilung: **06.09.2006**
(21) Anmeldenummer: 04722792.1
(22) Anmeldetag: 24.03.2004
(51) Int. Cl.: B60K 31/00

(54) **VERFAHREN ZUR RISIKOGEREGELTEN GESCHWINDIGKEIT EINES KRAFTFAHRZEUGES UND EINRICHTUNG ZUR DURCHFÜHRUNG DES VERFAHRENS**
METHOD FOR ADJUSTING THE SPEED OF A MOTOR VEHICLE ACCORDING TO RISK AND DEVICE FOR CARRYING OUT SAID METHOD
PROCEDE DE REGLAGE DE LA VITESSE D'UN VEHICULE AUTOMOBILE EN FONCTION DES RISQUES ET EQUIPEMENT CORRESPONDANT

(30) Priorität: 28.03.2003 DE 10314119
(43) Veröffentlichungstag der Anmeldung: 04.01.2006
(73) Patentinhaber: Bastian, Dieter, 19055 Schwerin (DE)
(72) Erfinder: BASTIAN, Dieter, Dr, 19055 Schwerin (DE); EISENREICH, Ralf, 09559 Freiberg (DE)
(74) Vertreter: Jaap, Reinhard
(86) Internationale Anmeldenummer: PCT/DE2004/000618
(87) Internationale Veröffentlichungsnummer: WO 2004/087454

(56) Entgegenhaltungen:
- DE-A- 4 123 110
- DE-A- 4 437 365
- DE-A- 19 501 950
- DE-A- 19 638 511
- DE-A- 19 700 353
- US-A- 5 748 476
- "HOW FAR CAN THE COMPUTER REPLACE THE DRIVER IN AUTOMATIC DRIVING" AUTOMOTIVE ENGINEER, MECHANICAL ENGINEERING PUBL.LTD. BURY ST.EDMUNDS, GB, Bd. 20, Nr. 5, 1. Oktober 1995 (1995-10-01), Seiten 18-20, XP000538784 ISSN: 0307-6490

## Beschreibung

Die Erfindung bezieht sich auf ein Verfahren nach dem Oberbegriff des Anspruchs 1 und ein System nach dem Oberbegriff des Anspruchs 9.
Derartige Verfahren und Systeme werden vorwiegend im Straßenverkehr eingesetzt.

Die Situation und der Trend im Straßenverkehr ist dadurch gekennzeichnet, dass Jahr für Jahr mehr Kraftfahrzeuge zugelassen als stillgelegt werden. Das führt zu einer immer stärker werdenden Verkehrsdichte, die wiederum immer höhere Anforderungen an den Fahrzeugführer stellt.
Die Unfallstatistik vermeldet daher auch eine stete Zunahme von Verkehrsunfällen mit erheblichen menschlichen Verlusten sowie gesundheitlichen und materiellen Schäden, wenn auch die schweren und tödlichen Verletzungen infolge verbesserten Sichcrhcitskomforts der Fahrzeuge zurückgingen.

Es sind nun aus dem Stand der Technik Bestrebungen erkennbar, dem Kraftfahrer die Wahrnehmung von Risikomerkmalen, die den Straßenverkehr behindern, zu erleichtern. So sind eine Reihe von technischen Einrichtungen bekannt geworden, in denen die Anwendung unterschiedlichster Sensoren zur Detektion von Hindernissen im Umfeld des Fahrzeugs und anderer Gefahren für die Verkehrssicherheit dargestellt wird. Es werden u.a. in der DE 100 36 276 A1, der DE 10103 767 A1, der DE 195 01 950 A1 und der EP 0 964 380 A2 Sensoren beschrieben, die nicht mehr nur einzelne Hindernisse aufspüren, sondern selbst das ganze Umfeld des Fahrzeuges absuchen und dabei zwischen stationären und mobilen Hindernissen einerseits und Personen unterscheiden, die sich bewegen und denen auszuweichen ist.
Dazu gehören auch Detektoren mit Photomischdioden, wie sie in der DE 198 21 974 A1 und der DE 199 16 123 A1 beschrieben sind.

Aus der DE 101 63 990 A1 ist auch ein universelles System der Kommunikation, Information und Navigation bekannt, das Mobilteile, Zentrale Server und die verschiedensten Verfahren der Satellitennavigation und des Mobilfunks nutzt, um vielfältige Gefahren zu melden und ihnen vorzubeugen.

In der DE 4123 110 A1 ist weiterhin eine Einrichtung zur Fahrgeschwindigkeitsregelung eines Kraftfahrzeuges beschrieben, die die Fahrzeuggeschwindigkeit beeinflussende Faktoren, wie Fahrerwunsch, Abstand zu einem vorausfahrenden Fahrzeug, Griffigkeit der Straße, Geschwindigkeit oder dergleichen ermittelt und daraus eine individuell zulässige Maximalgeschwindigkeit ermittelt.
Aus der DE 197 00 353 A1 ist auch eine Vorrichtung zur Diagnose, Steuerung, Übertragung und Speicherung sicherheitsrelevanter Systemzustandsgrößen eines Kraftfahrzeuges bekannt, die sensorisch ermittelte Zustandsgrößen bewertet, qualifiziert und bei sicherheitskritischen Abweichungen zu einem Sollzustand Steuerungsoperationen generiert.
Weiterhin wird in der DE 43 38 244 C2 ein Gefahrenabwendungssystem für ein Fahrzeug beschrieben, bei dem der Zustand des Kraftfahrzeug, die Umgebung der Fahrstrecke und der Fahrzeugführer überwacht werden. Aus den daraus gewonnenen Daten wird dann das Gefahrenpotential bewertet und bei einer bestimmten Gefahrensituation ein entsprechendes Steuersignal erzeugt.

Und letztendlich ist aus der DE 197 45 166 A1 ein Verfahren zur Sicherheitsüberwachung eines Kraftfahrzeuges beschrieben, bei dem zunächst aus einer digital gespeicherten Karte die momentane Position bestimmt und eine vorgesehene Fahrstrecke ausgewählt wird. Danach werden alle auf dieser Fahrstrecke befindlichen Gefahrenstellen lokalisiert und eine entsprechende automatische Bremsung ausgelöst, wenn die momentane Geschwindigkeit über einer kritischen Geschwindigkeit für die betreffende Gefahrenstelle und dem momentanen Abstand zu dieser Gefahrenstelle liegt.

In der Veröffentlichung "How for can the computer replace the Driver in Automatic Driving", Automotive Engineer, GB, Bd. 20, Nr. 5, 1.10.1995, Seiten 18-20, wird ein Verfahren zur risikogeregelten Geschwindigkeit eines Kraftfahrzeuges beschrieben, bei dem die aktuelle Geschwindigkeit gemessen und während der Fahrt Risikomerkmale ermittelt werden, aus denen ein integrales Risikopotential errechnet wird. Dieses integrale Risikopotential dient dann als Grundlage für eine Veränderung der Geschwindigkeit. Dieses Verfahren berücksichtigt allerdings nicht die inneren Zusammenhänge von Merkmalsmenge und geschwindigkeitsmoderierter spezifischer Gefährlichkeit der Risikomerkmale als den beiden Komponenten des integralen Risikoporentials und ist deshalb für eine effektive Anwendung ungeeignet.
Die DE 197 00 353 A1 beschreibt eine Vorrichtung zur Diagnose, Steuerung, Übertragung und Speicherung sicherheitsrelevanter Systemzustandsgrößen eines Kraftfahrzeug, bei der Sensoren zur Detektion von Risikomerkmalen, ein Display sowie ein Risikodecoder zur Verarbeitung von Informationsmengen zum Einsatz kommen. Dazu ist der Risikodecoder auch mit einem Geschwindigkeitsmesser verbunden. Aber auch diese Vorrichtung berücksichtigt nicht oder nur unzureichend die beiden Komponenten des Risikopotentials und arbeitet deshalb ungenau.

Alle genannten Verfahren und Einrichtungen gehen im Wesentlichen von der Vorstellung aus, dass Betriebsstörungen moderner Fahrzeugtechnik, sofern sie sich nicht selbständig regeln lassen, automatisch angezeigt werden, so dass das Risikopotential maßgeblich von Wahmchmungsverlusten des Fahrzeugführers über die permanenten und temporären Risikomerkmale der Verkehrsumwelt abhängt. Diese Vorstellung stimmt mit grundsätzlichen Erkenntnissen der Wahrnehmungstheoric überein, die besagen, dass der Fahrzeugführer etwa 90% seiner Informationen visuell aufnimmt, wovon aber schon unter Regelbedingungen 40 bis 50% nur unvollkommen oder fehlerhaft interpretiert werden. Dementsprechend sind alle bekannten technischen Einrichtungen auf die Verbesserung der Informationen für den Fahrzeugführer ausgerichtet.
Neuere Untersuchungen zeigen indessen, dass die Wahrnehmungsverluste und damit auch das Risikopotential nicht nur mit der Anzahl der Risikomerkmale des äußeren Milieus und damit mit der Informationsmenge wachsen. Das Risikopotential vergrößert sich ebenso mit der spezifischen Gefährlichkeit der permanenten und temporären Merkmale des äußeren Milieus, die wiederum von der Geschwindigkeit und von der typischen Verkehrssituation abhängt. Dabei spielt jedoch nicht nur die Geschwindigkeit an sich eine Rolle. Einen erheblichen Einfluss haben auch verkehrstechnische und siedlungsbedingte Module der Infrastruktur. Insofern kann die Überschreitung einer zulässigen Geschwindigkeit von 30 km/h genau so folgenreich sein wie die von 100 km/h.

Dieser Erkenntnis trägt keine der bekannten technischen Einrichtungen Rechnung und so sind diese technischen Einrichtungen auch nicht dazu geeignet, das Verkehrsunfallaufkommen wesentlich zu verringern.

Der Erfindung liegt daher die Aufgabe zu Grunde, ein gattungsgemäßes Verfahren und eine entsprechende Einrichtung zu entwickeln, die ein aus der Gesamtheit aller Unfallrisiken integriertes Risikopotential ermittelt und die Fahrweise auf dieses Risikopotential abstimmt.
Diese Aufgabe wird verfahrensseitig durch die kennzeichnenden Merkmale des Anspruches 1 und einrichtungsseitig durch die kennzeichnenden Merkmale des Anspruchs 9 gelöst. Zweckmäßige Ausgestaltung ergeben sich aus den Unteransprüchen 2 bis 8 und 10 bis 12.
Das neue Verfahren und die neue Einrichtung gehen von der Erkenntnis aus, dass eine qualitative oder quantitative Verbesserung der Wahrnehmung von Risikomerkmalen der Umwelt nicht automatisch zu einer Minimierung von Verkehrsunfällen führt, weil der Fahrzeugführer in kritischen Situationen überfordert ist, die Fülle der Verkehrsinformationen zu einer rationalen Entscheidung konkret umzusetzen.

Das neue Verfahren geht weiterhin von der Erkenntnis einer eigenen Analyse aus 35.128 amtlich registrierten Straßenverkehrsunfällen in repräsentativen territorialen Bereichen Norddeutschlands aus, wonach für diese Straßenverkehrsunfälle 19 verschiedene Risikomerkmale aus dem äußeren Milieu des Verkehrssystems und der Umwelt verantwortlich zeichnen, von denen bis zu 9 Risikomerkmale gleichzeitig auftreten.
Zu diesen Risikomerkmalen des äußeren Milieus gehören solche permanenten Merkmale wie Kurven, Steigungen, Ausfahrten, Bäume und Masten, ausgeschilderte Gefahrenschwerpunkte, lokale Unfallschwerpunkte, Fahrbahnmängel, Baustellen und andere Hindernisse sowie Wildwechsel und Vorfahrtzeichen.
Zu diesen Risikomerkmalen des äußeren Milieus gehören auch solche temporären Merkmale wie beispielsweise Dunkelheit, Nässe, Glätte, Wind, Nebel, Fußgänger und Radfahrer, motorisierte Zweiradfahrer, entgegenkommende Fahrzeuge und mitfahrende Fahrzeuge.

Das neue Verfahren geht weiterhin von der Erkenntnis der Analyse aus, wonach jedes Risikomerkmal ein spezifisches Risikopotential besitzt und dieses spezielle Risikopotential sich im Zusammenwirken mit weiteren der genannten Risikomerkmale und mit steigender Geschwindigkeit des Fahrzeuges erhöht. Aus der Sicht der Schwere der Verkehrsunfälle formieren sich auf diese Weise Risikomerkmale des äußeren Milieus zu Clustern, deren Potential durch neun Scorepunkte gekennzeichnet ist.
Und es lassen sich die möglichen Geschwindigkeiten des Fahrzeuges beispielsweise in drei verschiedene Geschwindigkeitsklassen einteilen. Diese Geschwindigkeitsklassen sind erstens das Abfahren, Wenden, Halten und Parken (AWHP) als die niedrigste Geschwindigkeit überhaupt, zweitens das Fahren mit einer erlaubten Geschwindigkeit und drittens das Fahren mit einer unerlaubten Geschwindigkeit. Diese drei Geschwindigkeitsklassen lassen sich mit Hilfe von Merkmalsmengen weiter unterteilen.

Aus den aus der Analyse ermittelten permanenten und temporären Risikomerkmalen des äußeren Milieus und aus den aus den Merkmalskombinationen ermittelten Scorepunkten und aus den drei Geschwindigkeitsklassen lässt sich für jedes Risikomerkmal des äußeren Milieus ein spezifisches Risikopotential ermitteln und in Potentialpunkten ausdrücken. Die gegenseitige Abhängigkeit dieser Parameter wird als eine unfallstatistische Standardmatrix ausgestaltet und der Ermittlung eines integralen Risikopotentials zugrunde gelegt. Dieses integrale Risikopotential wird dann in Risikoklassen von 1 bis beispielsweise 5 mit der Bedeutung sehr gering, gering, mittelgroß, groß und sehr groß ausgedrückt.

Das neue Verfahren geht auch von der Erkenntnis der Analyse aus, dass neben den genannten 19 permanenten und temporären Merkmalen des äußeren Milieus Verkehrsunfälle auch von individuellen Risikomerkmalen des Fahrzeugführers beeinflusst werden.

Dazu gehören insbesondere das Fahren mit einem Führerschein auf Probe oder der psychosomatische Zustand des Fahrzeugführers. Diese individuellen Risikomerkmale fließen daher ebenfalls in die Ermittlung des integralen Risikopotentials mit ein. Weitere Einflüsse auf die Kondition anzuzeigen, wie es sich zum Beispiel aus dem Lebensalter und dem Geschlecht des Fahrzeugführers ergibt, ist aus der Sicht der untersuchten 35.128 Verkehrsunfälle aller Schweregrade eher fraglich.

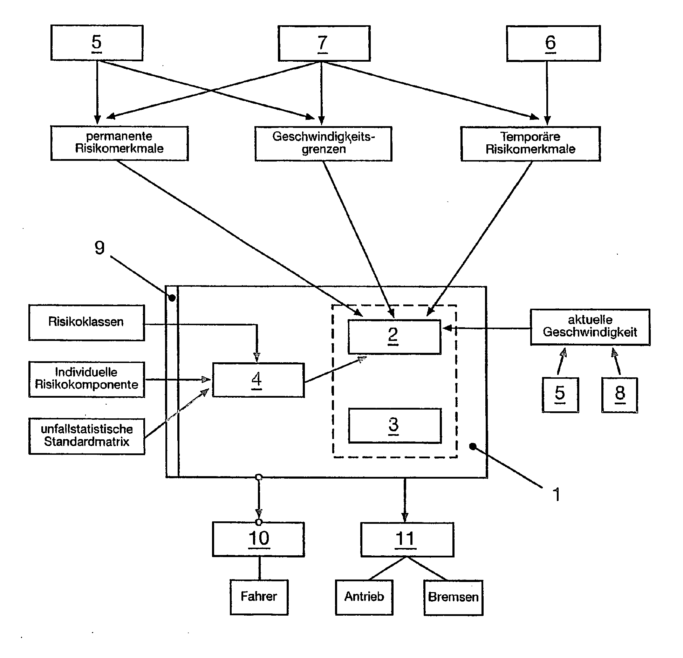

Die Erfindung soll anhand eines Ausführungsbeispieles näher erläutert werden.
Dazu zeigt die
- Fig. 1:: eine schematische Darstellung einer erfindungsgemäßen Einrichtung.

Nach der Fig. 1 besteht die Einrichtung im wesentlichen aus einem Risikodecoder 1. Dieser Risikodecoder 1 weist eine Risokomatrix 2 zur Aufnahme und Codierung von Informationsmengen, ein Speichermodul 3 zur zeitlich begrenzten oder andauernden Ablage von ausgewählten Informationsmengen und einen Operator 4 zur manuellen Eingabe von Informationen auf. Zur Weitergabe dieser Informationen ist der Operator 4 mit der Risikomatrix 2 verbunden. Zwischen dem Speichermodul 3 und der Risikomatrix 2 besteht eine funktionelle Verbindung zum wechselseitigen Austausch von Informationen. Zur Verarbeitung der Informationen ist der Risikodecoder 1 mit einem Betriebssystem ausgestattet.
Der Risikodecoder 1 ist ein Gerät, das im Fahrzeug fest installiert ist oder das über eine Halterung fest mit dem Fahrzeug verbunden ist und das zudem mit einer eingebauten Autonavigationsanlage oder mit einem handelsüblichen Pocket-PC verbunden sein kann.

Eingangsseitig ist der Risikodecoder 1 mit einer Eingangsmatrix 5 verbunden, die als Overlay einer handelsüblichen GPS - codierten topographischen Landkarte ausgelegt ist, die mit Hilfe eines Pocket - PC softwaremäßig der satellitengesteuerten Navigation des Fahrzeugs dienen kann. Analog kann die Eingangsmatrix 5 als Overlay einer fest im Fahrzeug installierten Satellitennavigationsanlage ausgelegt sein. In dieses Overlay werden mit Hilfe eines entsprechenden Menüs des handelsüblichen Software-Programms die permanenten Risikomerkmale und die Geschwindigkeitsbegrenzungen einer Fahrstrecke eingegeben. Während des Fahrvorgangs stellt die Eingangsmatrix 5 die permanenten Risikomerkmale und die Geschwindigkeitsgrenzen des aktuellen Streckenabschnitts der Risikomatrix 2 zur Verfügung. Zur Planung einer Fahrt kann die Eingangsmatrix 5 auch insofern vom Fahrer genutzt werden, als er nach seiner persönlichen Streckenerfahrung zusätzlich über das entsprechende Programm - Menü eigene streckenbezogene Risikofaktoren eingeben und auch beliebig wieder löschen kann, selbst während der Fahrt. Die permanenten Risikomerkmale und die Geschwindigkeitsgrenzen, die ursprünglich zum Programm gehören, sind schreibgeschützt, so dass sie vom Fahrer oder von dritten Personen schon aus Sicherheitsgründen nicht verändert werden können.

Der Risikodecoder 1 ist eingangsseitig weiterhin mit einem Sensorpaket 6 verbunden, das die Risikomatrix 2 mit allen, mit technischer Vernunft erfassbaren temporären Risikomerkmale versorgt. Dieses Sensorpaket 6 ist über eine Steckkabelverbindung mit dem Risikodecoder verbunden und an einer geeigneten äußeren Stelle des Fahrzeuges befestigt oder aber fest im Fahrzeug installiert.
Außerdem ist der Risikodecoder 1 eingangsseitig, für die Zeit des Vorbeifahrens begrenzt, mit regionalen Servern 7 eines ganzen territorialen Servernetzes verbunden, die jeweils der Risikomatrix 2 ergänzende permanente und/oder temporäre Risikomerkmale zur Verfügung stellen. Dabei werden Server 7 als regionale Institutionen in Betracht gezogen, die in einem Umkreis von etwa 150 km das Raster ihres Zuständigkeitsbereiches regelmäßig auf den neuesten Informationsstand bringen und vorhalten.
Dabei kann der Server 7 solche permanenten Risikomerkmale liefern, die in der Eingangsmatrix 5 nicht enthalten sind oder die nicht mehr dem aktuellen Stand entsprechen. Das sind beispielsweise Baustellen, Staus oder momentane Unfallorte. Der Server 7 kann aber auch solche temporären Risikomerkmale bereitstellen, die messtechnisch schwer zu erfassen sind, wie beispielsweise örtlich auftretender Nebel oder Straßenglätte. Der regionale Server 7 kann diese ergänzenden permanenten und temporären Risikomerkmale direkt in die Risikomatrix 2 des vorbeifahrenden Fahrzeuges eingeben oder über die Eingangsmatrix 5 in die Risikomatrix 2 einspeisen. In den Fällen, wo es zu einer überlagerten Informationsmeldung vom Server 7 und dem Sensorpaket 6 bzw. der Eingangsmatrix 5 zu einem bestimmten Risikomerkmal kommt, wird die Meldung des Sensorpakets 6 bzw. der Eingangsmatrix 5 gesperrt und nur die Meldung des Servers 7 verarbeitet.

Der Server 7 und/oder die Eingangsmatrix 5 melden weiterhin alle die Geschwindigkeitsgrenzen an die Risikomatrix 2, die sich aus den Verkehrsregeln ergeben.
Der Risikodecoder 1 ist eingangsseitig weiterhin mit dem Geschwindigkeitsmesser 8 des Fahrzeuges verbunden, der ständig die aktuelle Fahrgeschwindigkeit des Fahrzeuges in die Risikomatrix 2 einspeist. Alternativ kann die aktuelle Fahrgeschwindigkeit auch über die Eingangsmatrix 5 ermittelt und der Risikomatrix 2 zur Verfügung gestellt werden.

Und zuletzt besitzt der Risikodecoder 1 eingangsseitig eine manuelle Eingabeeinheit 9, über die der Operator 4 durch eine manuelle Eingabe über die unfallstatistische Standardmatrix und über die individuellen Risikomerkmale zur Weiterleitung an die Risikomatrix 2 versorgt wird.

Ausgangsseitig hat der Risikodecoder 1 ein Display 10, das dem Fahrzeugführer die ermittelte Risikoklasse anzeigt. Alternativ dazu kann der Risikodecoder 1 direkt mit einem Risikomaten 11 verbunden sein, der die ermittelte Risikoklasse mit der vorgegeben mittleren oder vorher frei gewählten Risikoklasse abgleicht und die Geschwindigkeit des Fahrzeuges automatisch auf die gewählte Risikoklasse einregelt. Dazu ist der Risikomat 11 fest mit dem Antriebssystem und dem Bremssystem des Fahrzeuges verbunden.

Die Risikomatrix 2 des Risikodecoders 1 ist mit einer entsprechenden unfallstatistischen Standardmatrix geladen, die beispielsweise 19 ausgewählte permanente und temporäre Risikomerkmale, sieben verschiedene Merkmalsgruppen von Risikomerkmalen und drei ausgewählte Geschwindigkeitsklassen beinhaltet.
In der Ausgangsposition stellt sich der Risikodecoder 1 automatisch auf eine mittlere Risikoklasse ein, die sich in einem Bereich von einer Risikoklasse 1 mit einem sehr geringen Risiko und zum Beispiel einer Risikoklasse 5 mit einem sehr hohen Risiko einordnet. Vor Antritt einer Fahrt gibt der Fahrzeugführer über die Eingabeeinheit 9 seine individuellen Risikofaktoren ein, die im Wesentlichen Angaben zur Fahrpraxis betreffen. Dabei hat der Fahrzeugführer lediglich einzugeben, ob er im Besitz eines Regelführerscheins oder eines Führerscheins auf Probe ist. Diese mittlere Risikoklasse kann der Fahrzeugführer auf Grund seiner momentanen körperlichen und psychischen Verfassung in freier Wahl nach unten und oben korrigieren und damit eine geringere oder eine höhere Risikoklasse einstellen. Diese vorgegebene mittlere oder frei gewählte Risikoklasse gilt als die Sollgröße für die vorgesehene Fahrt.

Vor der Fahrt stellt der Fahrer - analog zur herkömmlichen Autonavigationsanlage - in der Eingangsmatrix 5 die vorgesehene Fahrstrecke ein. Ist die Eingangsmatrix 5 mit einer herkömmlichen Satellitennavigationsanlage verknüpft, erfolgt die Einstellung der Fahrstrecke synchron und topographisch kongruent. Während der Fahrt ermittelt der Geschwindigkeitsmesser 8 des Fahrzeugs oder die Eingangsmatrix 5 die aktuelle Geschwindigkeit des Fahrzeugs und übermittelt diesen Wert an die Risikomatrix 2. Aus dieser Geschwindigkeit errechnet die Risikomatrix 2 dann jeweils die Länge des nächsten Streckenabschnitts der vorgesehenen Fahrstrecke, der bei geringerer Geschwindigkeit kleiner und bei höherer Geschwindigkeit größer bemessen ist. Die Bemessung der Streckenabschnitte erfolgt ununterbrochen während der Fahrt, wobei ihre Länge entsprechend der Geschwindigkeit des Fahrzeugs unterschiedlich groß ausfällt. Jeweils der aktuell bemessene Streckenabschnitt wird auf die Eingangsmatrix 5 übertragen. Die Eingangsmatrix 5 lädt ihn nun mit den eingetragenen permanenten Risikomerkmale und den eingetragenen Geschwindigkeitsgrenzen auf und schickt ihn mit diesen Informationen an die Risikomatrix 2 zurück. Gleichzeitig ermittelt das Sensorpaket 6 die temporären Risikomerkmale des Streckenabschnitts und überträgt sie ebenfalls an die Risikomatrix 2. Passiert das Fahrzeug den territorialen Zuständigkeitsbereich des nächsten Zentralen Servers 7, dann aktualisiert dieser automatisch alle eingetragenen Angaben über permanente und temporäre Risikomerkmale sowie der Geschwindigkeitsbegrenzungen in der Eingangsmatrix 5. Nach längerem Halt in einem territorialen Zuständigkeitsbereich eines Zentralen Servers 7 aktualisiert dieser die Daten in der Eingangsmatrix 5 bei erneutem Starten des Motors des Fahrzeugs. Die Risikomatrix 2 vergleicht die aktuelle Geschwindigkeit mit der momentanen Geschwindigkeitsbegrenzung und stuft die aktuelle Geschwindigkeit in eine der drei Geschwindigkeitsklassen ein. Die Risikomatrix 2 ordnet weiterhin die detektierten Risikomerkmale in Merkmalsgruppen ein, wie sie sich aus der unfallstatistischen Standardmatrix ergeben. Aus den Risikomerkmalen, den Merkmalsgruppen und der Geschwindigkeitsklasse ermittelt die Risikomatrix 2 dann im Vergleich mit der unfallstatistischen Standardmatrix einen speziellen Risikofaktor für jedes detektierte Risikomerkmal. Aus der Summe der speziellen Risikofaktoren aller auftretenden Risikomerkmale wird dann ein integrales Risikopotential für den gerade befahrenen Streckenabschnitt errechnet und als Risikoklasse ausgedrückt.

Die so ermittelte Risikoklasse gilt als eine Istgröße und wird dann mit der vor Beginn der Fahrt als Sollgröße eingegebenen Risikoklasse verglichen. Bei einer Überschreitung der Sollgröße erscheint eine entsprechende Warnmeldung auf dem Display 10, sodass der Fahrzeugführer eine klare Anweisung zum Verringern der Geschwindigkeit erhält. Alternativ dazu erhält der Risikomat 11 aus der Überschreitung der Sollgröße einen entsprechenden Stellbefehl für einen direkten Eingriff in die Antriebseinheit und Bremseinheit des Fahrzeuges.

### Liste der Bezugszeichen

- 1: Risikodecoder
- 2: Risikomatrix
- 3: Speichermodul
- 4: Operator
- 5: Eingangsmatrix
- 6: Sensorpaket
- 7: Server
- 8: Geschwindigkeitsmesser
- 9: manuelle Eingabeeinheit
- 10: Display
- 11: Risikomat

## Patentansprüche

1. Verfahren zur risikogeregelten Geschwindigkeit eines Kraftfahrzeuges, bei dem die vorgesehene Fahrstrecke berechnet wird, die aktuellen Fahrgeschwindigkeiten gemessen werden und während der Fahrt Risikomerkmale ermittelt werden, aus denen ein integrales Risikopotential errechnet wird, wobei das integrale Risikopotential als Grundlage für eine Veränderung der Geschwindigkeit des Verkehrsteilnehmers dient,
**dadurch gekennzeichnet, dass** aus der vorgesehenen Fahrstrecke der jeweils aktuelle geschwindigkeitsabhängige Streckenabschnitt berechnet wird, jedes detektierte Risikomerkmal des geschwindigkeitsabhängigen Streckenabschnittes unter Beachtung seiner Gefährlichkeit und der aktuellen Geschwindigkeit des Fahrzeuges auf sein spezifisches Risikopotential bewertet wird und aus der Summe der spezifischen Risikopotentiale aller detektierten Risikomerkmale ein integrales Risikopotential für den geschwindigkeitsabhängigen Streckenabschnitt errechnet wird.

2. Verfahren nach Anspruch 1,
**dadurch gekennzeichnet, dass** die Risikomerkmale permanente Merkmale sind, wie beispielsweise Kurven, Steigungen, Ausfahrten, Bäume und Masten, ausgeschilderte Gefahrenschwerpunkte, lokale Unfallschwerpunkte, Fahrbahnmängel, Baustellen, Wildwechsel und/oder Vorfahrtzeichen, die von einer Eingangsmatrix (5) und einem regionalen Server (7) bereitgestellt werden, und temporäre Merkmale sind, wie beispielsweise Dunkelheit, Nässe, Glätte, Wind, Nebel, Fußgänger und Radfahrer, Krafträder, entgegenkommende Fahrzeuge und/oder mitfahrende Fahrzeuge, die aus einem Sensorpaket (6) und aus dem regionalen Server (7) ermittelt werden.

3. Verfahren nach Anspruch 1,
**dadurch gekennzeichnet, dass** der Streckenabschnitt nach der aktuellen Geschwindigkeit des Verkehrsteilnehmers berechnet wird, wobei der Streckenabschnitt mit höherer Geschwindigkeit größer ausfällt.

4. Verfahren nach Anspruch 3,
**dadurch gekennzeichnet, dass** der berechnete Streckenabschnitt in die Eingangsmatrix (5) aufgenommen wird und die detektierten Risikomerkmale auf diesen Streckenabschnitt begrenzt bleiben.

5. Verfahren nach Anspruch 1,
**dadurch gekennzeichnet, dass** die Bewertung des spezifischen Risikopotentials jedes detektierten Risikomerkmals im Vergleich mit einer empirisch ermittelten unfallstatistischen Standardmatrix erfolgt, in dem die aktuelle Geschwindigkeit des Verkehrsteilnehmers in verschiedene vorbestimmte Geschwindigkeitsklassen und in dem jedes detektierte Risikomerkmal in Merkmalsgruppen eingeordnet wird.

6. Verfahren nach Anspruch 5,
**dadurch gekennzeichnet, dass** drei Geschwindigkeitsklassen für das Abfahren, Wenden, Halten und Parken (AWHP), die erlaubte Geschwindigkeit und die unerlaubte Geschwindigkeit gebildet werden und bedarfsweise durch Merkmalsmengen nochmals unterteilt werden.

7. Verfahren nach Anspruch t,
**dadurch gekennzeichnet, dass** das aus der Summe der spezifischen Risikopotentiale aller detektierten Risikomerkmale errechnete integrale Risikopotential des Streckenabschnittes in empirisch ermittelte Risikoklassen von sehr gering bis sehr groß definiert wird und die so ermittelten Risikoklassen mit einer vorher bestimmten Risikoklasse verglichen werden.

8. Verfahren nach Anspruch 7,
**dadurch gekennzeichnet, dass** die vorher bestimmte Risikoklasse unter Beachtung von individuellen Risikomerkmalen bestimmt wird, wozu beispielsweise die Fahrpraxis oder der aktuelle psychosomatische Zustand des Fahrzeugführers gehören

9. System zur Durchführung des Verfahrens nach dem Anspruch 1, bestehend aus einer Eingangsmatrix (5) mit gespeicherten permanenten Risikomerkmalen und/oder aus einem Sensorpaket (6) zur Detektion von temporären Risikomerkmalen aus der Umwelt und aus typischen Verkehrssituationen, sowie aus einem Risikodecoder (1) zur Verarbeitung von Informationsmengen und aus einem Display (10) zur Anzeige der detektierten Risikomerkmale,
**dadurch gekennzeichnet, dass** der Risikodecoder (1) ein Rechenmodul darstellt, eine rechentechnische Risikomatrix (2) und ein Speichermodul (3) besitzt und die Risikomatrix (2) zur Berechnung eines geschwindigkeitsabhängigen Streckenabschnius sowie zu Berechnung eines integralen Risikopotentials für den Streckenabschnitt im Risikodecoder (1) berangezogen wird, wobei die Berechnung im Vergleich mit einer abgespeicherten unfallstatistischen Standardmatrix erfolgt, in dem zunächst das spezielle Risikopotential eines jeden Risikomerkmales untersucht und daraus das integrale Risikopotential ermittelt wird.

10. System nach Anspruch 9,
**dadurch gekennzeichnet, dass** die Risikomatrix (2) eingangsseitig weiterhin mit mindestens einem regionalen Server (7) verbunden ist, der zur Eingangsmatrix (5) und zum Sensorpaket (6) ergänzende permanente und/oder temporäre Risikomerkmale und ausgeschilderte Geschwindigkeitsgrenzen des Streckenabschnitts liefert.

11. System nach Anspruch 10,
**dadurch gekennzeichnet, dass** die Risikomatrix (2) eingangsseitig weiterhin über einen Operator (4) mit einer manuellen Eingabeeinheit (9) für mindestens ein individuelles Risikomerkmal verbunden ist.

12. System nach Anspruch 9,
**dadurch gekennzeichnet, dass** die Risikomatrix (2) ausgangsseitig und alternativ zum Display (10) mit einem Risikomaten (11) verbunden ist, der direkt in die Antriebs- und Bremsanlage eines Fahrzeuges eingebunden ist.

## Claims

1. Method for the risk-regulated speed of a motor vehicle, in which the foreseen driving route is computed, the current driving speeds are measured, and during driving risk features are determined and an integrated risk potential is calculated from them, the integrated risk potential being used as the basis for a change of the speed of the road user, **characterized in that** from the foreseen driving route the current speed-dependent route section is computed, each detected risk feature of the speed-dependent route section is evaluated for its specific risk potential taking account of its degree of danger and the current speed of the vehicle, and from the sum of the specific risk potentials of all detected risk features an integrated risk potential for the speed-dependent route section is calculated.

2. Method according to Claim 1,
**characterized in that** the risk features are permanent features such as bends, rises, exits, trees and masts, signposted danger black spots, local accident black spots, road surface defects, roadworks, "wild animals" signs and/or right of way signs, which are provided by an input matrix (5) and a regional server (7), and temporary features such as darkness, wetness, skidding conditions, wind, fog, pedestrians and cyclists, motor cycles, vehicles travelling in the opposite and/or same directions, which are determined from a sensor package (6) and the regional server (7).

3. Method according to Claim 1,
**characterized in that** the route section is computed according to the current speed of the road user, the resulting route section being larger with higher speed.

4. Method according to Claim 3,
**characterized in that** the computed route section is included in the input matrix (5), and the detected risk features remain limited to this route section.

5. Method according to Claim 1,
**characterized in that** the specific risk potential of each detected risk feature is evaluated in comparison with an empirically determined standard accident statistics matrix, in which the current speed of the road user is classified into various predetermined speed classes, and each detected risk feature is classified into feature groups.

6. Method according to Claim 5,
**characterized in that** three speed classes are formed for moving off, turning, stopping and parking; the permitted speed; and the unpermitted speed, and subdivided as required by feature sets.

7. Method according to Claim 1,
**characterized in that** the integrated risk potential of the route section, which is calculated from the sum of the specific risk potentials of all detected risk features, is defined into empirically determined risk classes from very slight to very great, and the thus determined risk classes are compared with a previously specified risk class.

8. Method according to Claim 7,
**characterized in that** the previously specified risk class is specified taking account of individual risk features, to which, for instance, the driving practice or the current psychosomatic state of the vehicle driver belong.

9. System to carry out the method according to Claim 1, consisting of an input matrix (5) with stored permanent risk features, and/or of a sensor package (6) to detect temporary risk features from the environment and from typical traffic situations, and of a risk decoder (1) to process information sets, and of a display (10) to display the detected risk features,
**characterized in that** the risk decoder (1) represents a computing module, has a computerised risk matrix (2) and a memory module (3), and the risk matrix (2) is used in the risk decoder (1) to compute a speed-dependent route section and an integrated risk potential for the route section, the computation taking place in comparison with a stored standard accident statistics matrix, in which first the specific risk potential of each risk feature is investigated, and the integrated risk potential is determined from it.

10. System according to Claim 9,
**characterized in that** the risk matrix (2) is also connected on the input side to at least one regional server (7), which supplies supplementary permanent and/or temporary risk features and signposted speed limits of the route section to the input matrix (5) and to the sensor package (6).

11. System according to Claim 10,
**characterized in that** the risk matrix (2) is also connected on the input side via an operator (4) to a manual input unit (9) for at least one individual risk feature.

12. System according to Claim 9,
**characterized in that** the risk matrix (2) is also connected on the output side, and alternatively to the display (10), to a riskomat (11), which is linked directly into the drive and braking system of a vehicle.

## Revendications

1. Procédé de régulation de la vitesse d'un véhicule automobile en fonction des risques, selon lequel le trajet prévu est calculé, les vitesses de déplacement effectives sont mesurées et les caractéristiques de risque détectées pendant le trajet, un potentiel de risque intégral étant calculé, pour servir de base à une modification de la vitesse de l'usager de la route,
**caractérisé en ce que**
la section de trajet dépendante de la vitesse effective spécifique est calculée à partir du trajet prévu, chaque caractéristique de risque détectée de la section de trajet dépendante de la vitesse est évaluée en tenant compte de son caractère dangereux et de la vitesse effective du véhicule automobile sur son potentiel de risque spécifique et un potentiel de risque intégral est calculé à partir de la somme des potentiels de risque spécifiques de toutes les caractéristiques de risque pour la section de trajet dépendante de la vitesse.

2. Procédé selon la revendication 1,
**caractérisé en ce que**
les caractéristiques de risque sont des caractéristiques permanentes, comme par exemple des courbes, des montées, des sorties, des arbres et des poteaux, des points noirs de danger signalés, des points noirs locaux d'accident, des imperfections de la chaussée, des chantiers, des passages de gibier et/ou des signaux de route prioritaire, qui sont mis à disposition par une matrice d'entrée (5) et un serveur régional (7), et des caractéristiques temporaires, comme par exemple l'obscurité, l'humidité, l'état glissant, le vent, le brouillard, des piétons et des cyclistes, des motocyclettes, des véhicules automobiles venant en sens inverse et/ou des véhicules automobiles suivant derrière détectés à partir d'un dispositif capteur (6) et d'un serveur régional (7).

3. Procédé selon la revendication 1,
**caractérisé en ce que**
la section de trajet est calculée selon la vitesse effective de l'usager sur la voie publique, la section de trajet à la vitesse la plus élevée étant plus grande.

4. Procédé selon la revendication 3,
**caractérisé en ce que**
la section de trajet calculé est enregistrée dans la matrice d'entrée (5) et les caractéristiques de risque détectées restent limitées à cette section de trajet.

5. Procédé selon la revendication 1,
**caractérisé en ce que**
l'évaluation du potentiel de risque spécifique de chaque caractéristique de risque détectée s'effectue en comparaison d'une matrice standard de statistiques d'accidents déterminée empiriquement, dans laquelle la vitesse effective de l'usager sur la voie publique est intégrée dans différentes classes de vitesse prédéterminées et dans laquelle chaque caractéristique de risque détectée est intégrée dans des groupes de caractéristiques.

6. Procédé selon la revendication 5,
**caractérisé en ce que**
trois classes de vitesse sont formées pour effectuer un démarrage, un virage, un arrêt, un stationnement (AWHP), la vitesse autorisée et la vitesse non autorisée et sont encore subdivisées selon les besoins en groupes de caractéristiques.

7. Procédé selon la revendication 1,
**caractérisé en ce que**
le potentiel de risque intégral de la section de trajet calculé à partir de la somme des potentiels de risque spécifiques de toutes les caractéristiques de risque détectées est défini de très faible à très grand en classes de risque déterminées de façon empirique et les classes de risque ainsi détectées sont comparées à une classe de risque déterminée au préalable.

8. Procédé selon la revendication 7,
**caractérisé en ce que**
la classe de risque déterminée au préalable est déterminée en tenant compte des caractéristiques de risque individuelles, dont font par exemple partie la pratique de la conduite ou l'état psychosomatique effectif du conducteur.

9. Système de réalisation du procédé selon la revendication 1, constitué d'une matrice d'entrée (5) avec des caractéristiques de risque permanentes mises en mémoire et/ou d'un dispositif capteur (6) permettant la détection de caractéristiques de risque temporaires à partir de l'environnement et de situations de circulation typiques, et d'un décodeur de risque (1) permettant le traitement de quantités d'informations et d'un écran (10) permettant l'affichage des caractéristiques de risque détectées,
**caractérisé en ce que**
le décodeur de risque (1) représente un module de calcul, il possède une matrice de risque de technique de calcul (2) et un module d'enregistrement (3), la matrice de risque (2) permettant le calcul d'une section de trajet dépendante de la vitesse et le calcul d'un potentiel de risque intégral pour la section de trajet est entrée dans le décodeur de risque, le calcul s'effectuant en comparaison d'une matrice standard de statistiques d'accidents conservée en mémoire, dans laquelle le potentiel de risque spécial de chaque caractéristique de risque est d'abord examiné et le potentiel de risque intégral est détecté à partir de celui-ci.

10. Système selon la revendication 9,
**caractérisé en ce que**
la matrice de risque (2) est en outre relié côté entrée au moins à un serveur régional (7) qui fournit à la matrice d'entrée (5) et au dispositif capteur (6) les caractéristiques de risque permanentes et/ou temporaires complémentaires et les limites de vitesse signalées pour la section de trajet.

11. Système selon la revendication 10,
**caractérisé en ce que**
la matrice de risque (2) est en outre reliée côté entrée par un opérateur (4) à une unité d'entrée manuelle (9) pour au moins une caractéristique de risque individuelle.

12. Système selon la revendication 9,
**caractérisé en ce que**
la matrice de risque (2) est reliée côté sortie à un dispositif de détection automatique de risque (11) qui est directement intégré dans le système d'entraînement et de freinage d'un véhicule automobile et alternativement à l'écran (10).
